# EUROPÄISCHE PATENTANMELDUNG

(11) **EP 0 545 210 A1**
(43) Veröffentlichungstag der Anmeldung: **09.06.1993**
(21) Anmeldenummer: 92119932.9
(22) Anmeldetag: 24.11.1992
(51) Int. Cl.: H02K 3/51

(54) **Maschinenteil aus Faserverbundwerkstoff**

(30) Priorität: 29.11.1991 DE 4139333
(71) Anmelder: ABB PATENT GmbH, D-68309 Mannheim (DE)
(72) Erfinder: Flatz, Josef, Dr., W-6958 Wald-Michelbach (DE); Jung, Norbert, W-6840 Lampertheim (DE)
(74) Vertreter: Rupprecht, Klaus, Dipl.-Ing.

(57) **Zusammenfassung**

Die Erfindung betrifft ein Maschinenteil (10) für Kraftwerkskomponenten, welches aus einem polymeren Faserverbundwerkstoff hergestellt ist, wobei das Maschinenteil (10) aus einem mehrteiligen Grundkörper (10) und einem Spannteil (12, 22, 24) besteht, welches die Teile des Grundkörpers (10) zusammenhält.

## Beschreibung

Die Erfindung betrifft ein Maschinenteil für Kraftwerkskomponenten, insbesondere rotierende Teile, wie zum Beispiel Kappenringe für Generatorkappen.

Maschinenteile für Kraftwerkskomponenten werden seit jeher aus metallischen Werkstoffen gefertigt. Je nach Einsatzort handelt es sich dabei um hoch- und/oder warmfeste bzw. korrosionsbeständige Stähle sowie um Nickelbasislegierungen. Für besondere Anwendungen kommen besondere Werkstoffe in Betracht, zum Beispiel Kupfer für elektrische Leiter.

Im Laufe der Zeit, seit Kraftwerkskomponenten konstruiert und gebaut werden, wurde immer wieder versucht, erkannte Nachteile durch Einsatz anderer Werkstoffe zu vermeiden. Dies gilt insbesondere für die zum Einsatz gelangenden Stähle, zu deren Herstellung ständig verbesserte Herstellverfahren entwickelt worden sind.

Diese artgleichen Werkstoffe haben eins gemeinsam, nämlich das hohe spezifische Gewicht sowie eine mehr oder weniger ausgeprägte Neigung zur Korrosion, insbesondere Spannungsrißkorossion.

Eine gewisse Gewichtsersparnis ergibt sich beim sogenannten Leichtbau, durch Verwendung hochfester Stähle, wodurch eine Verringerung der tragenden Querschnitte möglich ist. Allerdings ist auch hier zu berücksichtigen, daß bei rotierenden Teilen, zum Beispiel in Generatoren, Motoren und Turbinen aufgrund der Fliehkräfte cirka zwei Drittel des lastaufnehmenden Querschnitts zur Aufnahme der aus dem eigenen Gewicht resultierenden Fliehkräfte benötigt werden und lediglich ein Drittel als Reserve bleiben, zum Beispiel bei Generatorkappenringen für das Halten der überstehenden Leiter des Generatorläufers.

Ein weiterer Nachteil metallischer Spannteile für rotierende Teile, insbesondere von metallischen Generatorkappenringen, resultiert daraus, daß zur Montage der Ringe ihre Erwärmung erforderlich ist, um durch die temperaturabhängige Ausdehnung des Materials ausreichendes Spiel zu erhalten für das Aufziehen des Ringes auf die Wellenenden. Hierbei kann es infolge zu hoher Temperatur zu Beschädigungen der Leiter kommen. Bei einer Demontage wiederholt sich die hohe thermische Belastung; sie führt zu Festigkeitseinbußen.

Ausgehend von diesem Stand der Technik ist es daher Aufgabe der Erfindung, Maschinenteile der eingangs genannten Art zu schaffen, welche bei möglichst geringem Gewicht einfach und kostengünstig herstellbar sind und die vorgenannten Nachteile vermeiden.

Die Lösung der Aufgabe ist gekennzeichnet durch die Merkmale des kennzeichnenden Teils des Patentanspruchs 1. Danach ist vorgesehen, daß die hochbelasteten Maschinenteile aus polymerem Faserverbundwerkstoff hergestellt werden, welcher endlose Fasern aus nichtmetallischen Werkstoffen aufweist, die in einer Matrix aus Kunststoff, vorzugsweise ein härtbares Kunstharz, zum Beispiel ein Epoxidhar, homogen eingebettet sind.

Als Fasermaterial sind vorzugsweise Kohlenstoffasern vorgesehen, die sich aufgrund ihres günstigen Festigkeits/Gewichtskennwertes insbesondere für die Gestaltung hochbelasteter Teile eignen, aber auch Glasfasern können in Betracht kommen, ebenso wie Aramidfasern, das sind Fasern aus aromatischen Polyamiden. Kohlenstoffasern dehnen sich bei Wärmeeinwirkung parktisch nicht aus; dies hat zur Folge, daß auch der Faserverbundwerkstoff bei Wärmeeinwirkung formstabil bleibt.

Besonders vorteilhaft eignet sich die Erfindung zur Verwendung bei der Herstellung rotierender Teile, wie zum Beispiel für die Herstellung von Kappenringen für Generatorläuferkappen oder ähnliches, da die Fliehkraftbeanspruchung um den Faktor 4 bis 5 reduziert wird.

Gemäß einer zweckmäßigen Weiterbildung der Erfindung ist das Maschinenteil aus wenigstens zwei Schalenhälften gebildet, welche zusammengesetzt und von einem Spannteil gehalten sind.

Die Schalenhälften sind als Laminat ausgebildet, welches aus lagenweise aufgebrachter Faser-Kunststoff-Verbundmasse besteht, welches in die jeweils gewünschte Endform gebracht und ausgehärtet wird. Dabei übernehmen die Schalenhälften die Aufgabe, örtliche Beanspruchungen, wie zum Beispiel Druck-, Biege- oder Scherbeanspruchung sowie mehrachsige Spannungen infolge Überlagerung der einzelnen Beanspruchungen, aufzunehmen, das heißt in die Schale bzw. Schalenhälfte gleichförmig einzuleiten, während das Spannteil, welches die Schalenhälften zusammenhält, dazu vorgesehen ist die Haltekräfte azimutal aufzunehmen.

Das Spannteil kann beispielsweise als Springring ausgebildet sein, der die formschlüssig aneinander angepaßten Schalen kraftschlüssig beaufschlagt. Hierunter ist ein aus Laminat gebildeter geschlossener Ring zu verstehen, der auf die Schalenhälften aufgeschoben wird.

Um eine Mehrachsigkeit von Spanungszuständen im Spannteil zu vermeiden, ist gemäß einer vorteilhaften Weiterbildung der Erfindung vorgesehen, daß das Spannteil von einem Wickelstab aus faserverstärktem Verbundwerkstoff der zuvor beschriebenen Art gebildet ist, der mit Vorspannung um die Schalen gelegt ist. Hierbei treten ausschließlich einachsige Beanspruchungen durch Zug in Umfangsrichtung auf.

Anstelle eines Wickelstabes kann auch ein Seil vorgesehen sein, das aus Einzelstäben aus Faserverbundwerkstoff hergestellt ist und größere Biegsamkeit und geringere Kerbempfindlichkeit als ein einzelner Wickelstab aufweist.

Die Herstellung der Schalen erfolgt durch lagenweises Aufbringen einer Faser-Kunststoff-Verbundmasse in dünnen Schichten am vorgesehenen Einbauort oder einem formgleichen Muster. Dabei wird die spätere Gesamtschale zunächst einstückig hergestellt und nach Aushärten der Kunststoffmatrix in die für eine Montage günstige Handhabung am Einbauort in eine zweckmäßige Anzahl von Einzelteilen zerteilt. Das Spannteil wird, sofern es sich nicht um einen Wickelstab oder ein Seil handelt, ebenfalls durch lagenweisen Aufbau in dünnen Schichten der Faser-Kunststoff-Verbundmasse hergestellt.

Bei rotationssymmetrischen Maschinenteilen ist vorgesehen, daß das Spannteil als Bandage um den Umfang des Maschinenteils gelegt wird und mit speziellen, vom jeweiligen Anwendungsfall abhängigen Endbefestigungen, welche gegebenenfalls auch aus Metall bestehen können, gehalten werden.

Bei rotierenden Teilen ist hierbei insbesondere auf einen entsprechenden Gewichtsausgleich zur Vermeidung von Unwuchten zu achten. Dieser Gewichtsausgleich kann beim obligatorischen Auswuchten der rotierenden Teile durch entsprechende Gewichte in bekannter Weise erreicht werden.

Um eine Lageänderung der Schalen einerseits sowie auch der Spannteile an den Schalen andererseits sicher auszuschließen, ist gemäß einer vorteilhaften Weiterbildung der Erfindung vorgesehen, daß die Schalenhälften an den aneinanderstoßenden Flächen formschlüssig ineinandergreifen. Ferner weisen die Schalen auf der zum Spannteil zugewandten Seite Anformungen auf, die formschlüssig mit dem Spannteil zusammenarbeiten und dessen Lageänderung verhindern.

Diese und weitere vorteilhafte Ausgestaltungen der Erfindung sind Gegenstand der Patentansprüche.

Anhand eines in der Zeichnung dargestellten Ausführungsbeispieles sollen die Erfindung, vorteilhafte Ausgestaltungen sowie Verbesserungen der Erfindung näher erläutert und beschrieben werden.

Es zeigen:
- Fig. 1: einen mehrteiligen Ringboden in Schrägansicht für einen Generatorkappenring
- Fig. 2: einen Längsschnitt durch einen Ringboden gemäß Fig. 1 mit einem Springring,
- Fig. 3: einen Längsschnitt durch einen Ringboden entsprechend Fig. 1 mit einer Einzelstabwicklung,
- Fig. 4: einen Ringboden entsprechend Fig. 1 mit einer Seilwicklung,
- Fig. 5: Schemaskizze des Endstücks eines Einzelstabes,
- Fig. 6: Schemaskizze des in Fig. 5 gezeigten Endstücks eines Einzelstabes um 90° versetzt,
- Fig. 7: Querschnitt durch eine Endbefestigung,
- Fig. 8: Draufsicht auf eine Endbefestigung,
- Fig. 9: Seitenansicht und Teilschnitt eines umwickelten Ringbodens gemäß Fig. 1,
- Fig. 10: Ausgestaltung eines Seilendstücks,
- Fig. 11: eine weitere Ausgestaltung eines Seilendstücks.

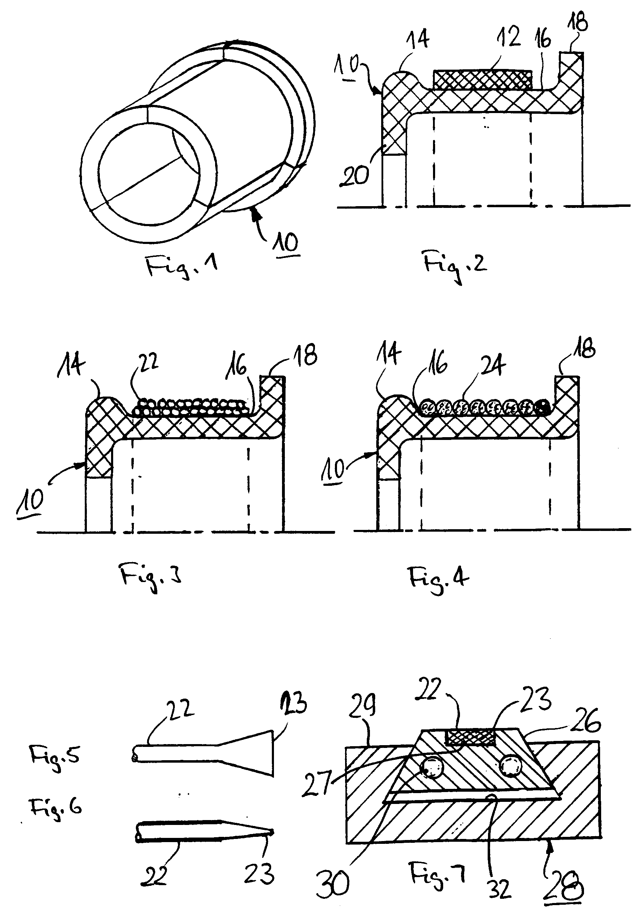

In Fig. 1 ist ein mehrteiliger Ringboden 10 dargestellt, der zur Verwendung für einen Kappenring eines nicht näher dargestellten Generatorläufers vorgesehen ist. Hierbei dient der Ringboden 10 als formschlüssige Begrenzung für die in dem Generatorläufer angeordneten Leiterenden der Wicklungsleiter, um zu verhindern, daß die im Endbereich des Generatorläufers unverkeilten Enden der Wicklungsleiter sich aus dem Generatorläufer lösen.

Der Ringboden 10 ist im gezeigten Beispiel in dreigeteilter Ausführung ausgebildet, um so bestmögliche Montagebedingungen zu gewährleisten.

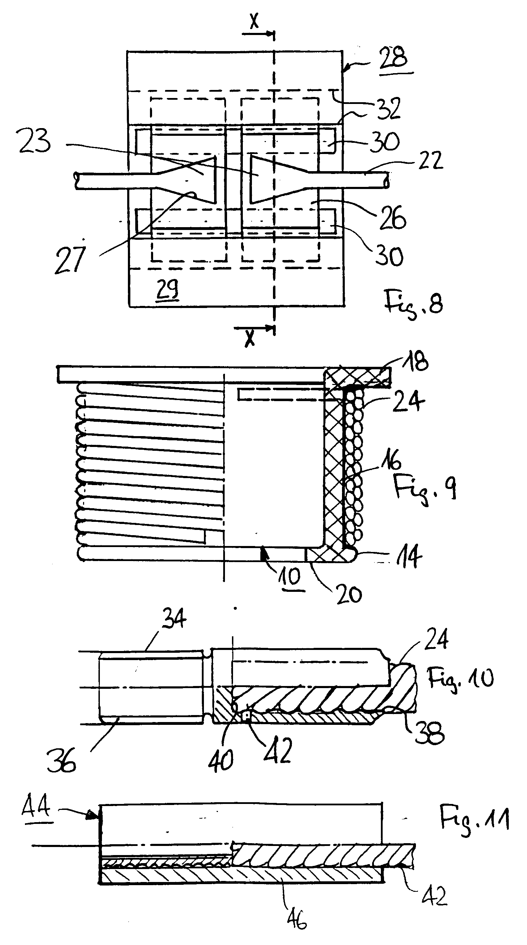

Zur Fixierung und Aufnahme der im Betrieb auftretenden Beanspruchungen erhält der Ringboden 10 eine ring- oder bandagenförmige Umschlingung, wie in den Figuren 2 bis 4 näher gezeigt.

In Fig. 2 ist ein Längsschnitt durch einen Ringboden 10 dargestellt, der von einem sogenannten Springring 12 gehalten ist.

Bei dem Springring handelt es sich um einen Ring aus Faserverbundwerkstoff mit endlosen, unidirektional gerichteten Fasern aus nichtmetallischen Werkstoffen, die in einer Matrix aus Kunststoff, vorzugsweise einem härtbaren Kunstharz, homogen eingebettet sind.Durch die gerichteten Fasern wird dem Verbundwerkstoff eine gezielte Anisotropie verliehen. Die Herstellung des Springrings erfolgt vorzugsweise auf einem entsprechenden Modellzylinder. Dabei werden dünnlagige Schichten aus endlosen Fasern, die gleichmäßig in die mitaufgetragene Kunststoffmatrix eingebettet sind, um die Form gewickelt, bis der vorgesehene Querschnitt erreicht ist. Anschließend erfolgt die Aushärtung des Kunstharzes. Nach der Aushärtung ist der Ring 12 voll verwendbar.

Eventuelle, durch die Aushärtung bedingte Maßabweichungen müssen bei der Gestaltung des Modellkörpers berücksichtigt werden.

Der Einsatz als Generatorkappenring erfolgt, indem der Ring 12 über einen am Ringboden stirnseitig angeformten Rundwulst 14 oder nach innen gerichtet und mit einer Schrägnut geschoben wird. Die hierzu erforderliche Dehnung wird vom Ring 12 voll elastisch aufgenommen, so daß er nach Überwindung des Wulstes 14, der in der Zeichnung überproportional dargestellt ist, eng am Umfang des Ringbodens 10 in dem hierfür vorgesehenen Sitzbereich 16 anliegt.

Um ein Abgleiten des Ringes 12 von der bestimmungsgemäßen Sitzfläche 16 des Ringbodens 10 sicher auszuschließen besitzt der Ringboden am wicklungsseitigen Ende eine kragenförmige Anformung 18, die eine Verlagerung des Ringes 12 in Richtung Generatorwicklung unmöglich macht. Am anderen Ende des Ringbodens 10 befindet sich der bereits erwähnte Wulst 14, der ebenfalls nur unter Aufbringung erheblicher Kraft vom Ring überwunden werden kann.

Das Durchmesserverhältnis des Wulstes 14 zur bestimmungsgemäßen Sitzfläche 16 ist so festgelegt, daß auch bei den maximal auftretenden Fliehkräften der Ring 12 nicht selbsttätig über den Wulst 14 gleiten kann, sondern daß hierzu noch zusätzliche Kraft erforderlich ist.

Radial innen liegend unter dem Wulst 14 ist ein Innenkragen 20 angeformt, der als Montagebegrenzung beim Aufschieben des Ringbodens 10 auf die nicht näher gezeigte Welle dient.

Fig. 3 zeigt eine ähnliche Anordnung, wie sie in Fig. 2 dargestellt ist, wobei jedoch anstelle eines Springrings eine Umwicklung des Ringbodens 10 auf seiner bestimmungsgemäßen Sitzfläche 16 mittels eines Einzelstabes 22 aufweist, der ebenfalls als Faserverbundwerkstoff ausgebildet ist. Dabei handelt es sich ebenfalls um eine in einer Kunststoffmatrix gerichtet eingelagerte Anordnung von Endlosfasern, die abhängig vom vorgesehen Verwendungszweck in unterschiedlicher Dicke zur Verfügung steht.

In Fig. 4 ist eine ähnliche Anordnung wie in Fig. 3 dargestellt, wobei jedoch anstelle der Umwicklung mit einem Einzelstab 22 eine Seilumwicklung 24 vorgesehen ist.

Fig. 5 zeigt das Endstück eines Einzelstabes 22, welcher sich zum freien Ende 23 hin flächig erweitert. Diese flächige Erweiterung kann dadurch erreicht werden, daß in das freie Ende bei der Fertigung des Einzelstabes Keile eingebracht werden, die die zuvor parallel ausgerichteten Fasern auseinanderspreizt, wobei die Keile dazu dienen, ein Rückstellen der Einzelfasern in ihre Ursprungslage zu verhindern. Eine andere Möglichkeit, eine solche flächige Erweiterung des freien Endes eines Einzelstabes 22 zu erreichen besteht darin, wie in Fig. 6 gezeigt, mit zunehmender Spreizung des freien Endes, die Querschnittsdicke zu vermindern.

In Fig. 7 ist eine Befestigungsvorrichtung 28 für eine aus Einzelstäben 22 gebildete Wicklungsanordnung, entsprechend Fig. 3 dargestellt.

Dabei handelt es sich um ein etwa quaderförmiges Teil 29, dessen der Wicklung zugewandte Unterseite gegebenenfalls an den Wicklungsradius angepaßt sein kann, so daß es auf seiner gesamten Fläche voll unterstützt ist. Parallel zu seiner Längsachse ist das Teil 29 mit einer schwalbenschwanzförmig ausgebildeten Längsnut 32, in welche ein Spannteil 26 mit trapezförmigen Querschnitt, der der Längsnut 32 angepaßt ist, eingesetzt ist. Das Spannteil 26 besitzt ebenfalls eine nutförmige Ausnehmung 27 in welche das gemäß Fig. 5 ausgebildete freie Ende 23 eines Einzelstabes 22 eingesetzt wird. Mittels Schrauben 30 kann das Spannteil betätigt werden, um den sich in der Ausnehmung 27 verkeilenden Einzelstab 22 zu spannen.

In Fig. 8 ist eine Draufsicht auf die Anordnung gemäß Fig. 7 dargestellt, wobei ersichtlich ist, daß in der Längsnut 32 zwei Spannteile 26 angeordnet sind, die mittels der Spannschrauben 30 gegeneinander verspannt werden.

Während im gezeigten Ausführungsbeispiel die Stabenden 23 von oben, das heißt außen am Umfang eingelegt werden, was prinzipiell eine leichtere Handhabung ermöglicht, kann auch vorgesehen sein, die Ausnehmung 27 zur Aufnahme des Stabendes 23 auf der Unterseite des Spannteils 26, das heißt auf der zum Nutgrund der Längsnut 32 zugewandten Seite anzuordnen, so daß ein Herausgleiten des Stabendes 23 aus der formschlüssigen Führung der Ausnehmung 27 in Folge Fliehkraft ausgeschlossen ist.

In Fig. 9 ist ein mit einer Seilwicklung 24 umwickelter Ringboden 10 dargestellt, wobei die linke Hälfte in Draufsicht gezeigt ist, während die rechte Hälfte von Fig. 9 entlang der Mittellinie als Längsschnitt gezeigt ist.

In Fig. 10 ist ein Endstück 34 eines Seiles 24 aus Faserverbundwerkstoff dargestellt, das als Gewindehülse ausgebildet ist, mit einem Gewindestück 36 und einer daran axial angeformten Muffe 38 zur Aufnahme des freien Endes des Seiles 24.

Die Muffe ist im Teillängsschnitt entlang der Mittellinie dargestellt, um die Verankerung des Seiles 24 in der Muffe 38 zu zeigen. Am Muffengrund 40 befindet sich eine radiale Öffnung 42, durch welche Verankerungsmittel zur Verankerung des in die Muffe 38 eingeführten Seils 24 zugeführt werden können. Zweckmäßigerweise ist als Verankerungsmittel ein Klebstoff auf Basis eines härtbaren Kunstharzes vorgesehen, der sich einerseits gut mit der Faserverbundmatrix des Seiles 24 verbindet und andererseits gute Haftung an der Muffenwand 40 aufweist.

Das Endstück 34 besteht üblicherweise aus Metall, insbesondere Stahl, und kann zusätzlich zur Adhäsionswirkung des über die Bohrung 42 zugeführten Verankerungsmittels auch noch örtlich verformt werden, um über Formschluß eine zusätzliche Verankerung des Seils 24 in der Muffe 38 zu erreichen. Allerdings ist hierbei auf die Kerbempfindlichkeit der einzelnen Seiladern zu achten. Um am Hülsenende 39 Kerbwirkungen infolge des Steifigkeitssprungs zu vermeiden, soll das Hülsenende allmählich auf den bestimmungsgemäßen Außendurchmesser übergehen.

Eine andere Lösung der Krafteinleitung in Seile aus faserverstärkten Verbundwerkstoffen ist in Fig. 11 gezeigt, hierbei handelt es sich um eine Schraubmuffe 44, in deren eines Ende das Leiterseil eingesteckt und mittels Gießmetall 46 vergossen ist. Das erstarrte Gießmetall bildet eine formschlüssige Verbindung einerseits mit dem Seil 42 aus Faserverbundwerkstoff und andererseits mit der Muffenwand.

## Patentansprüche

1. Maschinenteil für Kraftwerkskomponenten, zum Beispiel Kappenring für Generatorläuferkappen, dadurch gekennzeichnet, daß zu seiner Herstellung ein polymerer Faser-Verbund-Werkstoff mit endlosen Fasern aus nichtmetallischen Werkstoffen, die in eine Matrix aus Kunststoff homogen eingebettet sind, verwendet wird.

2. Maschinenteil nach Anspruch 1, dadurch gekennzeichnet, daß als Fasern Kohlenstoffasern vorgesehen sind.

3. Maschinenteil nach Anspruch 1, dadurch gekennzeichnet, daß als Fasern Glasfasern vorgesehen sind.

4. Maschinenteil nach Anspruch 1, dadurch gekennzeichnet, daß der Kunststoff ein härtbares Kunstharz, insbesondere ein Epoxidharz ist.

5. Maschinenteil nach Anspruch 1, dadurch gekennzeichnet, daß die Fasern unidirektional gerichtet sind, wodurch der Faserverbundwerkstoff eine gezielte Anisotropie erhält.

6. Maschinenteil nach einem der vorherigen Ansprüche, dadurch gekennzeichnet, daß jedes Maschinenteil (10) aus wenigstens zwei Schalenhälften gebildet ist, welche zusammengesetzt und von einem Spannteil (12, 22, 24) gehalten sind.

7. Maschinenteil nach Anspruch 6, dadurch gekennzeichnet, daß die Schalen als Laminat ausgebildet sind, welches aus lagenweise aufgebrachter Faser-Kunststoff-Verbundmasse besteht, die endgeformt und ausgehärtet ist.

8. Maschinenteil nach Anspruch 7, dadurch gekennzeichnet, daß die Schalen mit formschlüssig ineinandergreifenden Marken versehen sind, die eine Lageänderung verhindern.

9. Maschinenteil nach Anspruch 6, dadurch gekennzeichnet, daß das Spannteil als Springring (12) aus polymerem Faser-Verbundwerkstoff ausgebildet ist.

10. Maschinenteil nach Anspruch 6, dadurch gekennzeichnet, daß das Spannteil von einem Wickelstab (22) aus polymerem Faser-Verbund-Werkstoff gebildet ist, der mit Vorspannung um die Schalen gelegt ist.

11. Maschinenteil nach Anspruch 6, dadurch gekennzeichnet, daß das Spannteil von einem Seil (24) aus Einzelstäben aus polymerem Faser-Verbund-Werkstoff gebildet ist, das mit Vorspannung um die Schalen gelegt ist.

12. Herstellung eines Maschinenteils nach Anspruch 6, dadurch gekennzeichnet, daß zunächst ein Formteil durch lagenweises Aufbringen einer Faser-Kunststoff-Verbundmasse in dünnen Schichten am vorgesehenen Einbauort der Schalen oder einem formgleichen Musterkörper hergestellt wird und daß nach Aushärten der Kunststoffmatrix das Formteil in die für die Montage günstige Verwendung am Einbauort zweckmäßige Anzahl von Einzelschalen geteilt wird.
